# EUROPEAN PATENT SPECIFICATION

(11) **EP 3 983 714 B1**
(45) Date of publication and mention of the grant of the patent: **26.04.2023**
(21) Application number: 19746134.6
(22) Date of filing: 12.06.2019
(51) Int. Cl.: F16L 55/132, F16L 55/136, F16L 55/128

(54) **A LARGE DIAMETER PIPE CLOSING DEVICE**
ROHRVERSCHLUSSVORRICHTUNG MIT GROSSEM DURCHMESSER
DISPOSITIF DE FERMETURE DE TUYAU DE GRAND DIAMÈTRE

(43) Date of publication of application: 20.04.2022
(73) Proprietor: Inetec-Institute for Nuclear Technology Ltd., 10000 Zagreb (HR)
(72) Inventor: BAKIC, Ante, 10000 Zagreb (HR); SIKIC, Bruno, 10000 Zagreb (HR)
(74) Representative: Vukmir, Mladen
(86) International application number: PCT/HR2019/000015
(87) International publication number: WO 2020/249986

(56) References cited:
- WO-A1-2009/011543
- CN-A- 106 523 845
- CN-B- 106 499 908
- JP-A- 2002 168 391

## Description

### Technical Field

The present invention discloses a large diameter pipe closing device for stopping a liquid flow within the desired pipe. The corresponding technical field is related to pipes in general, more precisely to devices or appurtenances for use in, or in connection with pipes or pipe systems. The disclosed closing device is introduced axially into the pipe and expanded in situ to perform the desired task. The present invention is one of the technical solutions where the expansion is performed radially, i.e. by radial expansion of the sealing body.

### Technical Problem

The sealing of pressurised systems constitutes an important part of maintenance processes that ensure appropriate physical separation of a liquid flow within the system in need of such maintenance. Pipe sealing is a rather straightforward task when the pipe diameter is small and the liquid pressure is low. *In situ* sealing problems emerge for pipes with diameters above 0.5 m, as well as with the pressure above 1.5 bar, where such closing devices have to sustain a force greater than 120 kN without bending - which ultimately causes fluid leakage. The latter is extremely important if the closing device is mounted within a nuclear power plant or an oil rig piping system, where repairs should be performed. Namely, the disclosed closing device should ensure safe and uninterrupted operation of the whole system under inspection, except the part that is isolated for maintenance.

Beside the above cited challenges, specific problems arise when the sealing device needs to pass through a diameter that is significantly smaller than the diameter in the sealing section. In practice, when the ratio between the entry diameter (d), where the closing device is inserted, and the sealing section diameter (D) located somewhere within the pipe is (d/D)≈0.5, it is hard to perform a large diameter sealing that is reliable and can sustain the significant pressure exerted on said device.

The first technical problem to be solved by the present invention is to form a large pipe closing device capable of being inserted within a pipe with the diameter greater than 0.5 m and with the fluid pressure greater than 1.5 bar, preferably within diameters of up to 0.9 m and the fluid pressure of up to 2 bar, as well as of producing perfect sealing even if the entry diameter is 50% lower than the sealing place. All prior art solutions use an elastic sealing means to ultimately seal the pipe's inner diameter. Said technique works well for a low liquid pressure. Once the pressure rises, or if the diameter is large, the elastic sealing means tends to deform if not supported well, which leads to leakage and cracking under the exerted fluid pressure. Said technical problem has been solved by a specially designed set of pressure blades that support the elastic sealing means, i.e. rubber, across the whole sealing diameter, thus preventing any excessive elastic sealing means deformations.

The second technical problem to be solved by the present invention is to ensure that the said large pipe closing device has the expansion ratio, i.e. the min/max expanding ring mechanism diameter, below 0.5, preferably close to 0.46.

It is easy to find a technical solution with the specified d/D ratio. However, the prior art seems to be silent regarding the solutions that simultaneously meet the desired expansion ratio along with the requirements regarding the pipe's diameters of up to 0.9 m, and with the fluid pressure of up to 2 bar within said pipe.

The second technical problem is solved by a carefully designed stacking of the said set of pressure blades that support the elastic sealing means to achieve the desired expansion ratio of approximately 0.46.

### State of the Art

Several prior art documents related to the large diameter pipe closing device are reviewed herein in more detail. Chinese patent CN106523845B for the invention: PIPELINE PLUGGING DEVICE; filed in the name of Fuzhou Water Pipe Network Maintenance Co., Ltd ( 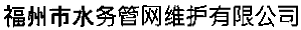 ) ; discloses a plugging or sealing device.

According to the abstract and figures, the cited device has an expanding ring mechanism that is engaged via a mirror-like mounted set of hinge arms connected to the lower and the upper assembly plates and the expanding ring. The latter expanding ring is engaged via a spindle mechanism. The whole mechanical system is covered by an elastic means in order to be leakage-proof. The system is very robust and according to the construction disclosed in the patent specification, the said system has an expansion ratio close to 0.57. Furthermore, our finite element method (FEM) calculation shows that the absence of pressure blades and in case of an applied pressure greater than 0.5 bar it leads to significant rubber strains between the hinge arms - where the elastic means is unsupported. The latter clearly demonstrates that the large diameter pipe closing device disclosed herein has non-trivial advantages over the cited CN prior art document; e.g. it can sustain a greater pressure and has a better expansion ratio than said CN106523845B solution. However, CN106523845B seems to be the closest prior art document for the hereby disclosed invention.

Chinese utility model CN202674700U for the invention: EXPANSION PLUGGING MECHANISM OF PLUGGING DEVICE; filed in the name of Shenyang Wanda Petrochemical Equipment Co Ltd.; discloses another pipe sealing mechanism suitable for large diameter pipes. Again, the expanding ring mechanism is present, and the mechanical part is covered with an elastic sealing means. The advantage of the described system is its simplicity over the CN106523845B and the present invention. However, the modest expansion ratio and the absence of the pressure supporting means renders it inferior to CN106523845B and the present invention as well.

Korean granted patent KR100728766B1 for the invention: THE FLUID-CROSSING GATE FOR PIPELINE; filed in the name of KOREA WATER RESOURCES CORP.; discloses yet another large diameter pipe closing device capable of being inserted perpendicularly into the fluid stream. The cited document provides a radially expanding sealing means that uses fluid pressure to improve the sealing with the wall of the inner pipe once said sealing is activated mechanically. According to the provided figures, it seems that the expansion ratio is close to 0.5. The sealing seems to be less efficient in comparison to the previously cited prior art due to the smaller radially exerted sealing force applied to the expanding member. This document represents a document defining the art in general.

The cited prior art remains silent regarding the pipe closing device with elastic means supporting devices that support the entire expanding ring mechanism surface preventing the elastic means, i.e. rubber, from being deformed due to the liquid pressure. Additionally, it seems that the expansion ratio of the closest prior art document is inferior to the disclosed invention expansion ratio due to the advanced expanding ring three-layer construction implemented in the present invention.

### Summary of the Invention

The present invention is a large diameter pipe closing device with an expanding ring mechanism formed between an upper assembly plate and a lower assembly plate according to claim 1.

The upper assembly plate has a series of radially distributed hinge mechanisms to which upper hinge arms are pivotally attached. Similarly, the lower assembly plate has a series of radially distributed hinge mechanisms to which corresponding lower hinge arms are pivotally attached. Said lower hinge arms are additionally equipped with the corresponding blades.

The expanding ring mechanism consists of multiple ring segments, each equipped with one of the corresponding double hinge mechanisms to which are pivotally attached the upper hinge arms to the upper sides of the said double hinge mechanisms, and to which are pivotally attached the lower hinge arms to the lower sides of the said double hinge mechanisms. The assembly plates are additionally mechanically connected by an expansion driving means which is capable of changing the relative distance between said assembly plates in a controllable manner. Changing the distance between assembly plates changes the radius of the expanding ring mechanism situated between the assembly plates. Changing the distance exerts force on the set of upper hinge arms and the set of lower hinge arms in order to push the ring segments in the radial direction once the distance between the assembly plates decreases, and to retract the ring segments radially once the distance between the assembly plates increases.

The lower assembly plate has a watertight mounted hollow mast with a solid base, where the said mast has an inner nest for receiving a part of, or the entire expansion driving means. An elastic sealing means is attached to the lower assembly plate from one side and to the upper hinge arms via a fastening means on the opposite side, enclosing all ring segments of the expanding ring mechanism by a wall sealing section and forming a barrier for the pipe fluid. Said fluid exerts pressure in the mast direction on the said elastic means once the sealing is performed.

The expanding ring mechanism consists of three layers, each layer is formed from only one type of ring segments; where all first ring segments are equipped with two slits, where all second ring segments are equipped with two sliding pins, and where all third ring segments are again equipped with two slits. All sliding pins are used to slide within the aforementioned slits in a way that the said ring segments are mutually connected in one or more repetitive patterns. The simplest pattern is: the first ring segment - the second ring segment - the third ring segment - the second ring segment and again the first ring segment. The connection between the slits and the corresponding sliding pins connection allows a rigid connection between the above said ring segments during the expansion and retraction process of the said expanding ring mechanism.

The blades, which act as pressure bearing barriers, are attached to the corresponding set of lower hinge arms via a corresponding blade fastening means allowing the said blades to be stacked one over the other once the expanding ring mechanism is fully retracted by the expansion driving means action. Said blades cover the entire expanding ring mechanism surface oriented towards the mast once the expanding ring mechanism is fully expanded, in a way that the said surface consists of the blades which partially overlap.

The elastic sealing means inner surface, oriented towards the expanding ring mechanism, fits the surface made of blades and transmits all the fluid pressure load to the blades which are fixed to the corresponding hinge arms. That prevents extreme deformation of the elastic sealing means, as well as leakage and cracking under the exerted fluid pressure.

In one embodiment, the upper hinge arms and the corresponding lower hinge arms are formed mirrored one over the other. The set of the first upper hinge arms and the first lower hinge arms is narrower than the second upper hinge arms and the second lower hinge arms in order to spare space on the corresponding assembly plates and to enable close packaging of said hinge arms by mounting interchangeably each first hinge arm after the second hinge arm.

In the preferred embodiment, each first blade is formed with its blade bended part, and each first blade is loosely attached via a first blade fastening means to the corresponding first lower hinge arm that allows stacking of said first blades one over the other, and their overlapping on their bended part regions during the retraction of the expanding ring mechanism. During the retraction process, each second blade is nested between two neighbouring first blades.

In yet another variant, the first blade fastening means is formed as a spring bolt fastening means.

In yet another embodiment, the expansion driving means is selected to be a spindle mechanism where the corresponding spindle axis mechanically connects the centres of the corresponding assembly plates. The said spindle axis is nested into the mast once the expanding ring mechanism is fully expanded and when the said spindle mechanism is engaged by a mechanical torque applied to an insertion socked situated at the top of the first assembly plate.

In yet another embodiment, the expansion driving means is selected to be a hydraulic cylinder with a corresponding piston rod that mechanical connects the centres of the corresponding assembly plates and expands or retracts the expanding ring mechanism of the said pipe sealing device. In one variant of the same embodiment, the hydraulic cylinder is situated within the mast.

In some variants, the mast is further equipped with a venting means for removing residual air accumulated between the outer surface of the elastic sealing means oriented towards the fluid within the said pipe, where the said closing device is mounted in order to stop the fluid flow within the pipe under maintenance.

The large diameter pipe closing device has the ratio between the minimum expanding ring mechanism diameter and the maximum expanding ring mechanism diameter less than 0.5. The device is capable of sealing pipes with the diameter of up to 0.9 m, where the constant pressure exerted on the blades, supporting the elastic sealing means, is up to 2 bar.

### Description of Figures

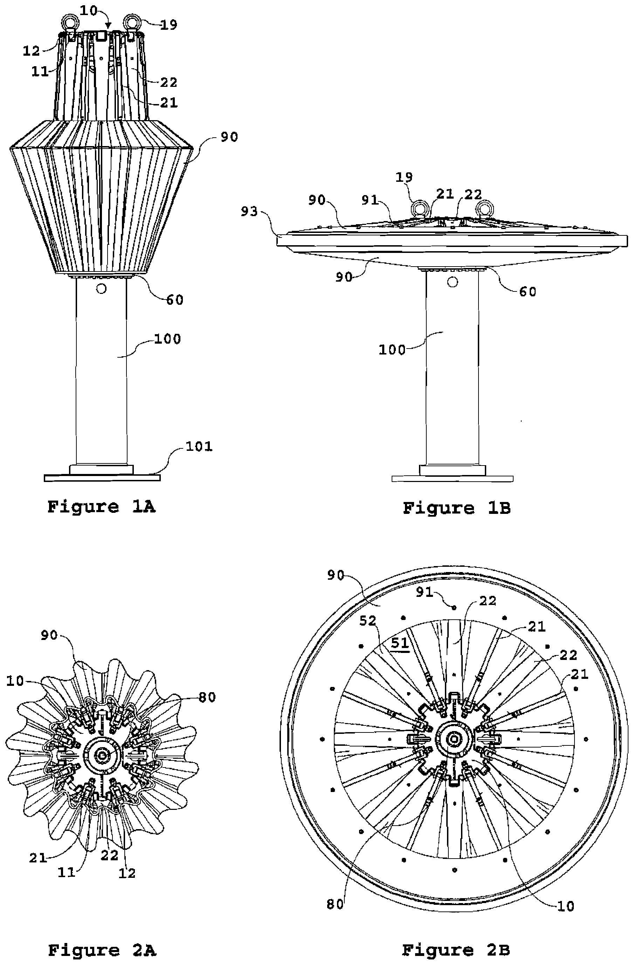

Fig. 1A shows the side view of the large diameter pipe closing device once the expanding ring mechanism is fully retracted, and Fig. 1B shows the same device once the expanding ring mechanism is fully expanded. Figs. 2A, 2B show the top view of the states of the same closing device depicted via corresponding Figs 1A, 1B.
Figs. 1A, 1B, 2A, 2B show the large diameter pipe closing device with the elastic sealing means mounted. Bearing in mind that the elastic sealing means covers the mechanism of the closing device, other figures depict the mechanism without the elastic sealing means mounted thereto.
Figs. 3A, 3B and 3C show the gradual expansion of the expanding ring mechanism, namely from the fully retracted position depicted in Fig. 3A to the fully expanded position depicted in Fig. 3C. Similarly, Figs. 4A, 4B and 4C show the equivalent top view positions.
Fig. 5A shows an elevated perspective view of the fully expanded position depicted in Fig. 3C, with the enlarged detail presented in Fig. 5B, providing insight into the construction of the expanding ring mechanism.
Fig. 6A shows another perspective view of the fully expanded position depicted in Fig. 3C, with the enlarged detail presented in Fig. 6B, allowing the distribution of supporting blades to be clearly visible.

### Detailed Description of the Invention

Fig. 1A shows the side view of the large diameter pipe closing device when the expanding ring mechanism (30) is fully retracted. In said state, the device is ready to be transported and re-inserted in another position, i.e. within another pipe. Fig. 1B shows the expanding ring mechanism (30) fully expanded and covered with an elastic sealing means (90), which seals the pipe by exerting pressure with a wall sealing section (93) on the inner pipe wall.

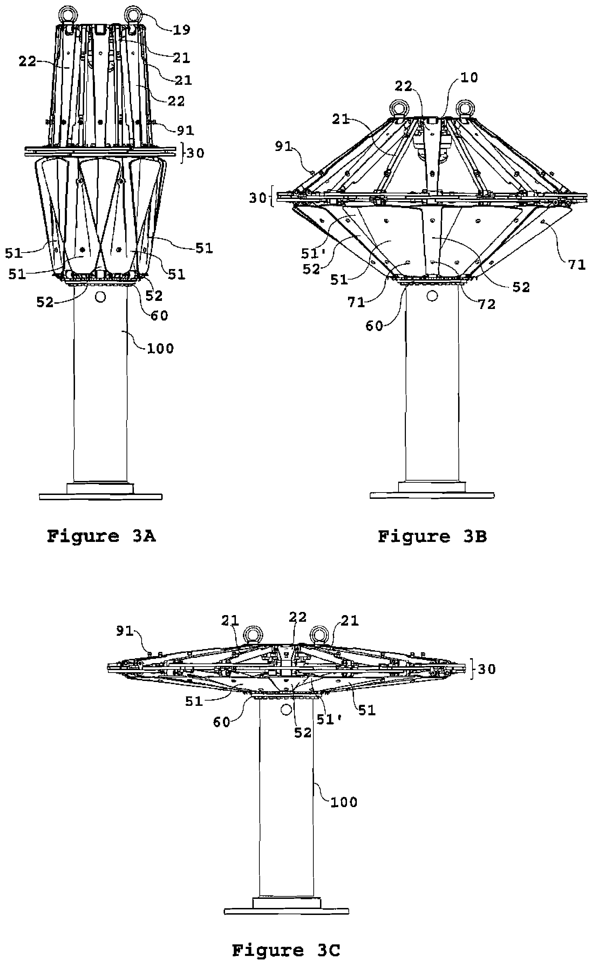

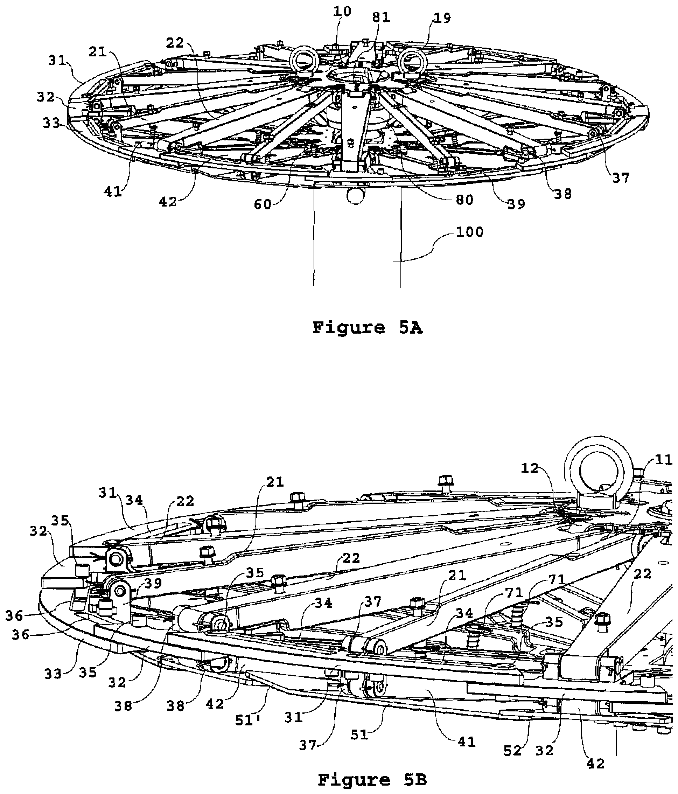

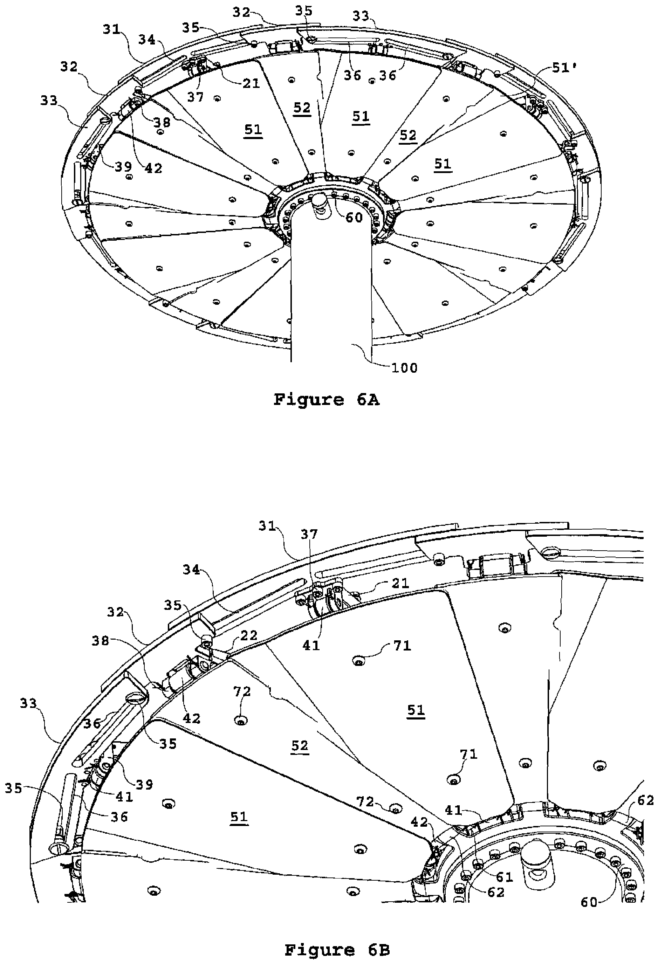

The large diameter pipe closing device has the expanding ring mechanism (30) formed between the upper assembly plate (10) and the lower assembly plate (60), as depicted in Figs. 3A, 3B and 3C. The geometry of the upper assembly plate (10) is shown in Fig. 5A, and the geometry of the lower assembly plate (60) is partially revealed in Fig. 6A, but it is basically the same as that of the corresponding upper assembly plate (10). The upper assembly plate (10) can be equipped with one or more lifting eyes (19) that facilitate the transport and the physical manipulation with the device, Fig 1A.

According to the preferred embodiment, the upper assembly plate (10) has a series of radially distributed upper assembly plate hinge mechanisms (11, 12), Fig 5B. Each hinge mechanism (11, 12) has pivotally attached the corresponding upper hinge arm (21, 22). Fixations between the said hinge arms (21, 22) and the corresponding hinge mechanisms (11, 12) are formed with the hinge pins in a manner that is well-known in the art. Said fixation allows each hinge arm (21, 22) to move pivotally around the corresponding hinge mechanism (11, 12). According to the preferred embodiment, the geometry of the first upper hinge arm (21) and the second hinge upper arm (22) is different, as depicted in Figs. 3B and 5A. The corresponding upper assembly plate hinge mechanisms (11, 12) are also different, as visible in Fig. 5B. Such a construction allows for a better packing of the large diameter pipe closing device due to the close packaging of the said hinge arms (21, 22) that are mounted interchangeably. Namely, each first hinge upper arm (21) follows the second hinge upper arm (22) . Said little trick improves the expansion ratio of the expanding ring mechanism (30), where each second hinge mechanism (12) is nested within the second upper hinge arm (22) that is formed significantly wider than the first upper hinge arm (21) which is nested within the first hinge mechanism (11), Fig. 5B.

In the preferred embodiment, the lower assembly plate (60) has a series of radially distributed hinge mechanisms (61, 62) to which the corresponding lower hinge arms (41, 42) are pivotally attached, in the same way as explained above for the upper hinge arms (21, 22) and upper assembly plate (10). The construction of the lower assembly plate first hinge mechanism (61) is identical to the construction of the upper assembly plate first hinge mechanism (11). The construction of the lower assembly plate second hinge mechanism (62) is identical to the construction of the upper assembly plate second hinge mechanism (12). That is partially visible in Fig. 5A.

The geometry of the whole assembly, i.e. assembly plates (10, 60) and their corresponding hinge mechanisms (11, 12; 61, 62), has a mirror symmetry above the plane in which the expanding ring mechanism (30) is situated. Each upper assembly plate first hinge mechanism (11) is situated right above the corresponding lower assembly plate first hinge mechanism (61), and each upper assembly plate second hinge mechanism (12) is situated right above the corresponding lower assembly plate second hinge mechanism (62). The same pattern is followed by hinge arms (21, 22; 41, 42). Each first upper hinge arm (21) is situated above the corresponding lower hinge arm (41), and each second upper hinge arm (22) is situated above the corresponding second lower hinge arm (42). All hinge arms (21, 22; 41, 42) are pivotally attached to the corresponding hinge mechanisms (11, 12; 61, 62) from one side - and the other side of the said hinge arms (21, 22; 41, 42) ends are attached to the corresponding double hinge mechanisms (37, 38, 39) situated on the corresponding ring segments (31, 32, 33); Figs. 3B, 5B. The only difference between the upper set of elements; i.e. the upper assembly plate (10), the upper hinge mechanisms (11, 12) and the upper hinge arms (21, 22) on one hand, and the lower set of elements; i.e. the lower assembly plate (60), the lower hinge mechanisms (61, 62) and the lower hinge arms (41, 42) on the other is that the latter hinge arms (41, 42) are additionally equipped with corresponding blades (51, 52), as depicted in Fig. 3B, 6B.

The expanding ring mechanism (30) consists of multiple ring segments (31, 32, 33), as shown in Figs. 5B and 6B. Each ring segment is equipped with only one of the corresponding double hinge mechanisms (37, 38, 39) to which hinge arms (21, 22; 41, 42) are pivotally attached in a manner that is well-known in the art, e.g. via hinge pins. Said double hinge mechanisms (37, 38, 39) always receive and connect a pair of geometrically identical hinge arms; either a pair of the first hinge arms (21, 41) or the pair of different geometry, e.g. the pair of the second hinge arms (22, 42). The first ring segment double hinge mechanism (37), mounted on the first ring segment (31), is connected to the first upper hinge arm (21), as well as to the first lower hinge arm (41), Fig 5B. The second ring segment double hinge mechanism (38), mounted on the second ring segment (32), is connected to the second upper hinge arm (22), as well as to the second lower hinge arm (42), Fig 5B. The third ring segment double hinge mechanism (39), mounted on the third ring segment (33), is connected to the first upper hinge arm (21), as well as to the first lower hinge arm (41), Fig 5B. Each first ring segment (31) is equipped with two first ring segment slits (34), Fig. 6B. Each second ring segment (32) is equipped with two second ring segment sliding pins (35), Figs. 5B, 6B. Each third ring segment (33) is equipped with two third ring segment slits (36), Fig. 6B. Said slits (34, 36) and pins (35) are designed to cooperate, e.g. the pin (35) diameter is slightly lower than the width of said slits (34, 36), allowing the said pins (35) to slide across the slits (34, 36), Fig. 6B, once the ring segments (31, 32, 33) change their mutual distances.

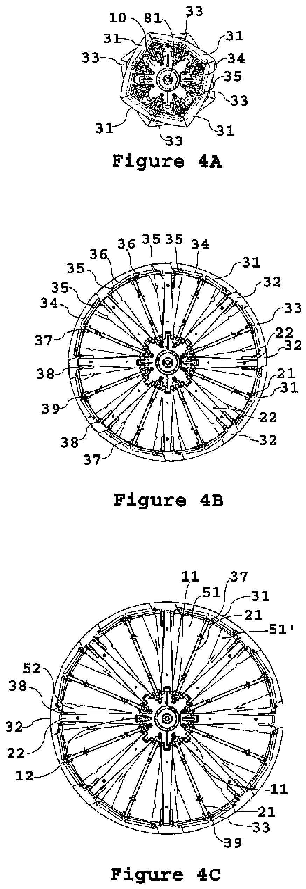

How does the expanding ring mechanism (30) work? The expanding ring mechanism (30) consists of three different layers. Each layer is formed/selected from one type of ring segments (31, 32, 33) only; Figs. 5B, 6B. All sliding pins (35) are used to slide within the slits (34, 36) in a way that the said ring segments (31, 32, 33) are mutually connected in one or more repetitive patterns. The sliding pins (35) are fixed within the slits (34, 36) and secured, for instance with bolts allowing the said pins (35) to slide within the slits (34, 36) without substantive friction. The "repetitive pattern" herein stands for the essential, e.g. minimum number of ring segments that are mutually connected: the first ring segment (31) - connected to - the second ring segment (32) - connected to - the third ring segment (33) - connected to - the second ring segment (32) and again - connected to - the first ring segment (31). Said minimum number of segments may be repeated an arbitrary number of times, for instance 4 times, as presented in Fig. 5A. To a person skilled in the art it is evident that more is better, but mechanical and geometrical constrains seems to give the best results for patterns that are repeated 3-5 times. Said repetitive pattern geometry allows the expanding ring mechanism (30) to be retracted as depicted in Fig. 4A, partially expanded as depicted in Fig. 4B, and finally fully expanded as depicted in Fig. 4C. It should be remembered that in all phases, the said expanding ring mechanism (30) is made of firmly connected ring segments (31, 32, 33) allowing the said segments (31, 32, 33) to move only in the expanding ring mechanism (30) plane whose movements are defined by the slits' (34, 36) directions. Moreover, the ring segments (31, 32, 33) slide one over the other, which is particularly well depicted in Fig. 6A. Such a three-layer construction allows the mechanism to achieve the ratio between the minimum expanding ring mechanism (30) diameter and the maximum expanding ring mechanism (30) diameter which is less than 0.5; Figs. 4A, 4C.

An appropriate drive is needed to expand or retract the expanding ring mechanism (30). In that sense, the said assembly plates (10, 60) are additionally mechanically connected by an expansion driving means (80) capable of changing the relative distance between the said assembly plates (10, 60) in a controllable manner. A person skilled in the art will immediately recognize that the said action changes the radius of the expanding ring mechanism (30) situated between the assembly plates (10, 60). Namely, the set of upper hinge arms (21, 22) and the set of lower hinge arms (41, 42) will push the ring segments (31, 32, 33) in radial direction once the distance between the assembly plates (10, 60) decreases, and it will radially retract the ring segments (31, 32, 33) once the distance between the assembly plates (10, 60) increases. In that sense, the phases depicted in Figs. 3A, 3B, 3C should be compared. The choice of an expansion driving means (80) may vary; it may be a spindle mechanism with a spindle insertion socket (81) as shown in Fig. 5A., or a variant with a hydraulic cylinder and a piston rod which connects the assembly plates (10, 60).

If a spindle mechanism is selected, it is natural that assembly plates (10, 60) will contain the spindle mechanism elements. Fig. 5A shows a spindle driving mechanism (80) situated beneath the upper assembly plate (10) which is engaged by the crank inserted into the corresponding insertion socket (81). Crank rotation precisely adjusts the distance between the assembly plates (10, 60), and during the expansion of the expanding ring mechanism (30), the spindle protruding through the lower assembly plate (60) and nests into the hollow mast (100) equipped with a mast base (101). Said mast (100) is attached to the lower assembly plate (60) as its integral part; Figs 1A, 1B. All connections between the assembly plate (60) and the mast (100) should be formed watertight.

In another variant, the hydraulic cylinder may be situated within the hollow mast (100) and fixed to the lower assembly plate (60). The piston rod of the said hydraulic cylinder is then connected to the upper assembly plate (10) and said hydraulic cylinder is used for regulating the expansion of the expanding ring mechanism (30). The hydraulic lines should in that case be inserted through the whole closing device. In yet another variant, the hydraulic cylinder may be fixed to the upper assembly plate (10) with a piston rod that engages the lower assembly plate (60). In the latter case, the mast (100) may be formed significantly smaller, bearing in mind that a driving means (80) is mounted on the top of the closing device.

Other expansion driving means (80) variants; e.g. the use electric step motors or similar, are understandable per se to a person skilled in the art. However, the use of expensive driving means can be problematic when a large diameter pipe closing device is used in nuclear power plants only once. In case of high radiation doses, such a device should be discarded as harmful for human health once it is used. In that case, the spindle mechanism is an inexpensive and a perfectly suitable driving means (80) to perform the desired task.

In order to perform the main technical function, i.e. to close the flow across the pipe, an elastic sealing means (90) is attached to the lower assembly plate (60); e.g. with an appropriate set of screws from that very side. Also, an elastic sealing means (90) is attached to the upper hinge arms (21, 22) via a fastening means (91) on the opposite side; Figs. 1A, 1B. In practice, the elastic sealing means (90) is usually a rubber cover, reinforced or not, whose thickness is around 0.5 cm, and which encloses all ring segments (31, 32, 33) of the expanding ring mechanism (30), as well as a wall sealing section (93), which is in firm connection to the pipe's wall. Fluid pressure is exerted on the elastic sealing means (90) from the mast (100) direction, and all surfaces oriented towards the fluid should be watertight up to the pressure of 2 bar.

What is significantly new and inventive in this construction are the supporting blades (51, 52), which act as pressure bearing barriers and are attached to the corresponding set of lower hinge arms (41, 42). It is evident that the advantage of the use of elastic sealing means (90) has its limitations regarding the pressure that a such device, e.g. the CN106523845B construction, can sustain. In the prior art, the elastic sealing means (90) is spanned directly over the set of lower hinge arms. If a significant pressure above 0.5 bar is applied, the elastic sealing means deformation occurs between the said hinge arms. One rather impractical solution to the observed deformation problem is to increase the number of lower hinge arms and to decrease the spacing between said arms - which ultimately increases the assembly plates surface. Thus, said solution is fairly limited if one would like to achieve the expansion ring mechanism ratio close to 0.5. Another possible approach, used in the disclosed invention, is to cover the entire expanding ring mechanism (30) with pressure bearing barriers, i.e. supporting blades (51, 52), as depicted in Fig. 6A.

In the preferred embodiment, two kinds of blades were used; the first blades (51), which have partially bended parts (51'), and the second blades (52). The first blades (51) are attached to the first lower hinge arms (41) via the first fastening means (71). The second blades (52) are attached to the second lower hinge arms (42) via the second fastening means (72). The used fastening means (71, 72) allows the said blades (51, 52) to be stacked one over the other once the expanding ring mechanism (30) is fully retracted, as depicted in Fig. 3A. On the other hand, the said blades (51, 52) cover the entire expanding ring mechanism (30) surface oriented towards the mast (100) once the said expanding ring mechanism (30) is fully expanded, Fig. 6A, in a way that the said surface consists of the blades (51, 52) which partially overlap. It is important to emphasise that even the partially expanded ring mechanism (30), as depicted in Fig. 3B, the pressure blades (51, 52) cover the whole expanding ring mechanism (30) surface sufficiently well and can transmit the pressure towards the lower hinge arms (41, 42).

According to the preferred embodiment, each first blade (51) is loosely attached, via the first blade fastening means (71), to the corresponding first lower hinge arm (41). Each second blade (52) is firmly attached, via the second blade fastening means (72), to the corresponding second lower hinge arm (42). That fact allows stacking of the said first blades (51) one over the other, and their overlapping on their bended part (51') regions during the retraction of the expanding ring mechanism (30), where said bended part (51') regions define the stacking process; compare Figs. 3A and 3B. During the said action, each second blade (52) is nested between two neighbouring first blades (51); Figs. 3A, 3B and 3C. The first blade fastening means (71) is preferably formed as a spring bolt fastening means, as depicted in Fig. 5B.

It is evident that the inner surface of the elastic sealing means (90), oriented towards the expanding ring mechanism (30), fits the surface made of blades (51, 52), as depicted in Fig 6B. The elastic sealing means (90) transmits all the fluid pressure load to the said blades (51, 52) which are fixed to the corresponding hinge arms (41, 42), and thus prevents extreme deformation of the elastic sealing means (90), as well as leakage and cracking under the exerted fluid pressure, pressures above 1.5 bar in a large diameter pipe. On the other hand, the use of blades (51, 52) reduces the number of corresponding hinge arms (41, 42) necessary to sustain the exerted pressure and prevent excessive strains of the elastic means (90), as was the case with the cited prior art solutions.

The disclosed invention has been extensively tested. It was found that the large diameter pipe closing device should be further equipped with a venting means for removing residual air accumulated between the outer surface of the elastic sealing means (90), oriented towards the fluid within the said pipe, and the fluid per se. Said venting means, formed in the preferred variant as the standard valve, operates remotely as an electro-valve mounted within the mast (100) which is submerged into the fluid, preferably close to the lower assembly plate (60), or even formed as a part of the said lower assembly plate (60). The removal of residual air is essential for a better distribution of fluid pressure over the elastic sealing means (90).

Regarding the material used to from a large diameter pipe closing device disclosed herein, a person skilled in the art will certainly use a steel or an appropriate stainless-steel as material for forming the elements or the parts that is durable and should sustain significant forces. As an elastic sealing means, the use of NBR (nitrile-butadiene rubber) is common in the practice.

### Industrial Applicability

Industrial applicability of said invention is evident. According to the preferred embodiment, depicted in Figs. 1A and 2A, when the expanding ring mechanism (30) is fully retracted, the device is inserted into the pipe, which needs to be sealed. The mast (100) is oriented towards the fluid and the device is positioned within the pipe. In the case where the expansion driving means (80) is a spindle mechanism, a crank is inserted into the insertion socket (81), and the expansion process, depicted in Figs. 3A, 3B, 3C, begins. The entire time, the blades (51, 52) cover the inner surface of the elastic sealing means (90), oriented towards the expanding ring mechanism (30), and said blades (51, 52) serve as pressure bearing barriers capable of transmitting the entire fluid pressure on the lower hinge arms (41, 42); regardless of whether the device is maximally expanded or not, Figs. 3B, 3C. In other words, the device is capable of sealing pipes with different diameters with the same efficiency, preferably from 0.6 m - 0.9 m. Once sufficiently expanded, the elastic means wall sealing section (93) fits the inner pipe wall and seals the pipe from the mast (100) direction. If necessary, residual air accumulated between the outer surface of the elastic sealing means (90) and fluid can be removed via a venting means built into the device. Said device has been tested for the fluid pressure of up to 2 bar and the sealing diameters of 0.9 m.

### Reference numbers

- 10: upper assembly plate
- 11: upper assembly plate, first hinge mechanism
- 12: upper assembly plate, second hinge mechanism
- 19: lifting eye
- 21: first upper hinge arm
- 22: second upper hinge arm
- 30: expanding ring mechanism
- 31: first ring segment
- 32: second ring segment
- 33: third ring segment
- 34: first ring segment slit
- 35: second ring segment sliding pin
- 36: third ring segment slit
- 37: first ring segment double hinge mechanism
- 38: second ring segment double hinge mechanism
- 39: third ring segment double hinge mechanism
- 41: first lower hinge arm
- 42: second lower hinge arm
- 51: first blade
- 51': first blade bended part
- 52: second blade
- 60: lower assembly plate
- 61: lower assembly plate first hinge mechanism
- 62: upper assembly plate second hinge mechanism
- 71: first blade fastening means
- 72: second blade fastening means
- 80: expansion driving means
- 81: insertion socket
- 90: elastic sealing means, i.e. rubber covering
- 91: fastening means for elastic sealing means
- 93: wall sealing section
- 100: mast with an optionally inserted expansion driving means
- 101: mast base

## Claims

1. A large diameter pipe closing device with an expanding ring mechanism (30) formed between an upper assembly plate (10) and a lower assembly plate (60),
- where the upper assembly plate (10) has a series of radially distributed hinge mechanisms (11, 12) to which upper hinge arms (21, 22) are pivotally attached;
- where the lower assembly plate (60) has a series of radially distributed hinge mechanisms (61, 62) to which lower hinge arms (41, 42) are pivotally attached;
- where the expanding ring mechanism (30) consists of multiple ring segments (31, 32, 33), each equipped with one of the corresponding double hinge mechanisms (37, 38, 39) to which are pivotally attached the upper hinge arms (21, 22) to the upper sides of the said double hinge mechanisms (37, 38, 39), and to which are pivotally attached the lower hinge arms (41, 42) to the lower sides of the said double hinge mechanisms (37, 38, 39);
- where the said assembly plates (10, 60) are additionally mechanically connected by an expansion driving means (80) capable of changing the relative distance between said assembly plates (10, 60) in a controllable manner, where the said action changes the radius of the expanding ring mechanism (30) situated between the assembly plates (10, 60) forcing the set of upper hinge arms (21, 22) and the set of lower hinge arms (41, 42) to push the ring segments (31, 32, 33) in the radial direction once the distance between the assembly plates (10, 60) decreases, and to retract the ring segments (31, 32, 33) radially once the distance between the assembly plates (10, 60) increases;
- where the lower assembly plate (60) has a water-tight mounted hollow mast (100) with a solid base (101), where the said mast (100) has an inner nest for receiving a part of, or the entire expansion driving means (80);
- where an elastic sealing means (90) is attached to the lower assembly plate (60) from one side and to the upper hinge arms (21, 22) via a fastening means (91) on the opposite side, enclosing all ring segments (31, 32, 33) of the expanding ring mechanism (30) by a wall sealing section (93) and forming a barrier for the pipe fluid which is exerting pressure in the mast (100) direction on the said elastic means (90);
- where the expanding ring mechanism (30) consists of three layers, each layer being formed from one type of ring segments only; where all first ring segments (31) are equipped with two slits (34), where all second ring segments (32) are equipped with two sliding pins (35), where all third ring segments (33) are equipped with two slits (36); wherein all sliding pins (35) are used to slide within the slits (34, 36) in a way that the said ring segments (31, 32, 33) are mutually connected in one or more patterns: the first ring segment (31) - the second ring segment (32) - the third ring segment (33) - the second ring segment (32) and again the first ring segment (31); wherein the connection between the slits (34, 36) and the corresponding sliding pins (35) allows a rigid connection between the above said ring segments (31, 32, 33) during the expansion and retraction process of the said expanding ring mechanism (30); **characterised in that**
- the lower hinge arms are equipped with corresponding blades (51, 52);
- the blades (51, 52), which act as pressure bearing barriers, are attached to the corresponding set of lower hinge arms (41, 42) via a corresponding blade fastening means (71, 72) allowing the said blades (51, 52) to be stacked one over the other once the expanding ring mechanism (30) is fully retracted by the expansion driving means (80) action, and where the said blades (51, 52) cover the entire expanding ring mechanism (30) surface oriented towards the mast (100) once the said expanding ring mechanism (30) is fully expanded in a way that the said surface consists of the blades (51, 52) which partially overlap; and
- the inner surface of the elastic sealing means (90), oriented towards the expanding ring mechanism (30), fits the surface made of the blades (51, 52) and transmits all the fluid pressure load to the said blades (51, 52) which are fixed to the corresponding hinge arms (41, 42) and prevents extreme deformation of the elastic sealing means, as well as leakage and cracking under the exerted fluid pressure.

2. A large diameter pipe closing device according to claim 1, wherein the upper hinge arms (21, 22) and the corresponding lower hinge arms (41, 42) are formed mirrored one over the other; the first upper hinge arms (21) and the first lower hinge arms (41) being narrower than the second upper hinge arms (22) and the second lower hinge arms (44) in order to spare space on the corresponding assembly plates (10, 60) and to enable close packaging of the said hinge arms by mounting interchangeably each first hinge arm (21, 41) after the second hinge arm (22, 42).

3. A large diameter pipe closing device according to any of the preceding claims, wherein each first blade (51) is formed with its blade bended part (51'), and where each first blade (51) is loosely attached via the first blade fastening means (71) to the corresponding first lower hinge arm (41) that allows stacking of the said first blades (51) one over the other and their overlapping on their bended part (51') regions during the retraction of the expanding ring mechanism (30), where each second blade (52) is nested between two neighbouring first blades (51).

4. A large diameter pipe closing device according to claim 3, wherein the first blade fastening means (71) is formed as a spring bolt fastening means.

5. A large diameter pipe closing device according to any of the claims 1-4, wherein the expansion driving means (80) is selected to be a spindle mechanism where the corresponding spindle axis mechanically connects the centres of assembly plates (10, 60), and where the said spindle axis is nested into the mast (100) once the expanding ring mechanism (30) is fully expanded, the said spindle mechanism being engaged by a mechanical torque applied to an insertion socked (81) situated at the top of the first assembly plate (10).

6. A large diameter pipe closing device according to any of the claims 1-4, wherein the expansion driving means (80) is selected to be a hydraulic cylinder with a corresponding piston rod that mechanical connects the centres of assembly plates (10, 60) and expands or retracts the expanding ring mechanism (30) of the said closing device.

7. A large diameter pipe closing device according to claim 6, wherein the hydraulic cylinder is situated within the mast (100).

8. A large diameter pipe closing device according to any of the preceding claims, wherein the mast (100) is further equipped with a venting means for removing residual air accumulated between the outer surface of the elastic sealing means (90) oriented towards the fluid within the said pipe, where the said closing device is mounted to stop the said fluid flow.

9. A large diameter pipe closing device according to any of the preceding claims, wherein the ratio between the minimum expanding ring mechanism (30) diameter and the maximum expanding ring mechanism (30) diameter is less than 0.5.

10. A large diameter pipe closing device according to any of the preceding claims, wherein the device is capable of sealing the pipes with the diameter up to 0.9 m, and where the exerted pressure on the blades (51, 52) supporting the elastic sealing means (90) is up to 2 bar.

## Patentansprüche

1. Vorrichtung zum Verschließen von Rohren mit großem Durchmesser mit einem zwischen der oberen Montageplatte (10) und der unteren Montageplatte (60) ausgeführten Spreizringmechanismus (30),
- wobei die obere Montageplatte (10) eine Reihe radial verteilter Gelenkmechanismen (11, 12) aufweist, an denen die oberen Gelenkarme (21, 22) schwenkbar angebracht sind;
- wobei die untere Montageplatte (60) eine Reihe radial verteilter Gelenkmechanismen (61, 62) aufweist, an denen die unteren Gelenkarme (41, 42) schwenkbar angebracht sind;
- wobei der Spreizringmechanismus (30) aus mehreren Ringsegmenten (31, 32, 33) besteht, von denen jedes mit einem der entsprechenden Doppelgelenkmechanismen (37, 38, 39) ausgestattet ist, an denen schwenkbar die oberen Gelenkarme (21, 22) an den oberen Seiten der erwähnten Doppelgelenkmechanismen (37, 38, 39) befestigt sind, und an denen schwenkbar die unteren Gelenkarme (41, 42) an den unteren Seiten der erwähnten Doppelgelenkmechanismen (37, 38, 39)befestigt sind;
- wobei die erwähnten Montageplatten (10, 60) zusätzlich mechanisch mit Hilfe eines Expansionsbetätigungsmittels (80) verbunden sind, das auf steuerbare Weise den relativen Abstand zwischen den erwähnten Montageplatten (10, 60) ändern kann, wo die erwähnte Wirkung den Radius des Spreizringmmechanismus (30) ändert, der sich zwischen Montageplatten (10, 60) befindet, den Satz oberer Gelenkarme (21, 22) und den Satz unterer Gelenkarme (41, 42) dazu treibend, die Ringsegmente (31, 32, 33) in radialer Richtung zu schieben, wenn sich der Abstand zwischen den Montageplatten (10, 60) verringert, und die Ringsegmente (31, 32, 33) radial einzuziehen, wenn sich der Abstand zwischen den Montageplatten (10, 60) vergrößert;
- wobei die untere Montageplatte (60) einen wasserdichten hohlen Mast (100) mit einer festen Basis (101) hat, wobei der erwähnte Mast (100) eine innere Fassung zum Aufnehmen eines Teils oder des ganzen Expansionsbetätigungsmittels (80) hat;
- wobei das elastische Dichtmittel (90) auf der einen Seite an der unteren Montageplatte (60) und auf der gegenüberliegenden Seite mit Hilfe von Befestigungsmitteln (91) an den oberen Gelenkarmen (21, 22) befestigt ist, alle Ringsegmente (31, 32, 33) des Spreizringmechanismus (30) umfasst mit einem Teil zum Abdichten der Wand (93) und eine Barriere für das Fluid in dem Rohr bildet, das Druck auf das erwähnte elastische Mittel (90) in Mastrichtung (100) ausübt;
- wobei der Spreizringmechanismus (30) aus drei Schichten besteht und jede Schicht nur aus einer Art von Ringsegmenten gebildet ist; wobei alle ersten Ringsegmente (31) mit zwei Schlitzen (34) ausgestattet sind, wobei alle zweiten Ringsegmente (32) mit zwei Gleitstiften (35) ausgestattet sind, wobei alle dritten Ringsegmente (33) mit zwei Schlitzen (36) ausgestattet sind; wobei alle Gleitstifte (35) verwendet werden, um innerhalb der Schlitze (34, 36) so zu gleiten, dass die Ringsegmente (31, 32, 33) in einem oder mehreren Mustern miteinander verbunden sind: erstes Ringsegment (31) - zweites Ringsegment (32) - drittes Ringsegment (33) - zweites Ringsegment (32) und wieder erstes Ringsegment (31); wobei die Verbindung zwischen den Schlitzen (34, 36) und den entsprechenden Gleitstiften (35) eine feste Verbindung zwischen den vorgenannten Ringsegmenten (31, 32, 33) während des Ausdehnungs- und Einziehvorgangs des erwähnten Spreizringmechanismus (30) ermöglicht;
**gekennzeichnet dadurch, dass**
- die unteren Gelenkarme mit entsprechenden Schaufeln (51, 52) ausgestattet sind;
- Schaufeln (51, 52), die als druckaufnehmende Barrieren wirken, sind an einem entsprechenden Satz unterer Gelenkarme (41, 42) mit Hilfe eines geeigneten Schaufelbefestigungsmittels (71, 72) befestigt, das den Schaufeln (51, 52) ermöglicht, sich übereinander zu stapeln, nachdem der Spreizringmechanismus (30) durch die Wirkung des Expansionsbetätigungsmittels (80) vollständig eingezogen ist, und wobei die erwähnten Schaufeln (51, 52) die gesamte Oberfläche des zum Mast (100) gerichteten Spreizringmechanismus (30) bedecken, nachdem der erwähnte Spreizringmechanismus (30) vollständig ausgedehnt ist, so dass die Oberfläche aus sich teilweise überlappenden Schaufeln (51, 52) besteht; und
- die zum Spreizringmechanismus (30) gerichtete Innenfläche des elastischen Dichtmittels (90) auf der von den Schaufeln (51, 52) abgeleiteten Fläche aufliegt und den gesamten Flüssigkeitsdruck auf die erwähnten Schaufeln (51, 52) überträgt, die an den entsprechenden Gelenkarmen (41, 42) befestigt sind und eine extreme Verformung des elastischen Dichtmittels sowie ein Auslaufen und Reißen unter Flüssigkeitsdruck verhindern.

2. Vorrichtung zum Verschließen von Rohren mit großem Durchmesser nach Anspruch 1, **dadurch gekennzeichnet, dass** die oberen Gelenkarme (21, 22) und die entsprechenden unteren Gelenkarme (41, 42) spiegelnd übereinander geformt sind; die ersten oberen Gelenkarme (21) und die ersten unteren Gelenkarme (41) sind schmaler als die zweiten oberen Gelenkarme (22) und die zweiten unteren Gelenkarme (44), um an den entsprechenden Montageplatten (10, 60) Platz zu machen, und um ein dichtes Packen der erwähnten Gelenkarme zu ermöglichen, indem jeder erste Gelenkarm (21, 41) abwechselnd hinter dem zweiten Gelenkarm (22, 42) montiert wird.

3. Vorrichtung zum Verschließen von Rohren mit großem Durchmesser nach einem der vorhergehenden Ansprüche, **dadurch gekennzeichnet, dass** jede erste Schaufel (51) mit ihrem gebogenen Schaufelblatt (51') geformt ist, und wobei jede erste Schaufel(51) lose mit Hilfe von einem ersten Mittel zum Befestigen der Schaufel (71) an dem entsprechenden ersten unteren Gelenkarm (41) befestigt ist, was ermöglicht, die ersten erwähnten Schaufeln (51) während des Zurückziehens des Spreizringmechanismus (30) übereinander zu stapeln und in den Bereichen ihres gebogenen Blattes (51') umzuklappen, wobei jede zweite Schaufel (52) zwischen zwei benachbarten ersten Schaufeln (51) eingebettet ist.

4. Vorrichtung zum Verschließen von Rohren mit großem Durchmesser nach Anspruch 3, **dadurch gekennzeichnet, dass** das erste Mittel zum Befestigen der Schaufel (71) als Mittel zum Befestigen einer Federschraube ausgebildet ist.

5. Vorrichtung zum Verschließen von Rohren mit großem Durchmesser nach einem der Ansprüche 1 bis 4, **dadurch gekennzeichnet, dass** das Expansionsbetätigungsmittel (80) als Spindelmechanismus ausgewählt ist, wobei die entsprechende Spindelachse mechanisch die Mittelpunkte der Montageplatten (10, 60) verbindet, und wo die Spindelwelle in einem Mast (100) eingebettet ist, nachdem der Spreizringmechanismus (30) vollständig verbreitet ist, wird der erwähnte Spindelmechanismus durch ein mechanisches Drehmoment erfasst, das auf eine Einführhülse (81) angewandt wird, die sich an der Spitze der ersten Montageplatte (10) befindet.

6. Vorrichtung zum Verschließen von Rohren mit großem Durchmesser nach einem der Ansprüche 1 bis 4, **dadurch gekennzeichnet, dass** das Expansionsbetätigungsmittel (80) als Hydraulikzylinder mit einem entsprechenden Kolben ausgewählt ist, der mechanisch die Mittelpunkte der Montageplatten (10, 60) verbindet und den Spreizringmechanismus (30) der erwähnten Verschlussvorrichtung erweitert oder einzieht.

7. Vorrichtung zum Verschließen von Rohren mit großem Durchmesser nach Anspruch 6, **dadurch gekennzeichnet, dass** der Hydraulikzylinder innerhalb des Mastes (100) angeordnet ist.

8. Vorrichtung zum Verschließen von Rohren mit großem Durchmesser nach einem der vorhergehenden Ansprüche, **dadurch gekennzeichnet, dass** der Mast (100) zusätzlich mit Entlüftungsmitteln zum Entfernen von Restluft ausgestattet ist, die sich zwischen der Außenfläche des elastischen Dichtungsmittels (90) in Richtung der Flüssigkeit innerhalb des Rohrs angesammelt hat, wobei die Verschlussvorrichtung so montiert ist, dass sie die Fluidströmung stoppt.

9. Vorrichtung zum Verschließen von Rohren mit großem Durchmesser nach einem der vorhergehenden Ansprüche, **dadurch gekennzeichnet, dass** das Verhältnis zwischen dem minimalen Durchmesser des Spreizringmechanismus (30) und dem maximalen Durchmesser des Spreizringmechanismus (30) kleiner als 0,5 ist.

10. Vorrichtung zum Verschließen von Rohren mit großem Durchmesser nach einem der vorhergehenden Ansprüche, **dadurch gekennzeichnet, dass** die Vorrichtung in der Lage ist, Rohre mit einem Durchmesser von bis zu 0,9 m abzudichten, und wobei der auf die das elastische Dichtmittel (90) stützenden Schaufeln (51, 52) ausgeübte Druck bis zu 2 bar beträgt.

## Revendications

1. Dispositif de fermeture de tuyau de grand diamètre avec un mécanisme à anneau expansible (30) formé entre une plaque d'assemblage supérieure (10) et une plaque d'assemblage inférieure (60),
- où la plaque d'assemblage supérieure (10) comporte une série de mécanismes d'articulation répartis radialement (11, 12) auxquels des bras d'articulation supérieurs (21, 22) sont fixés de manière pivotante ;
- où le plateau inférieur d'assemblage (60) comporte une série de mécanismes d'articulation (61, 62) répartis radialement auxquels sont fixés des bras d'articulation inférieurs (41, 42) pivotants,
- où le mécanisme d'anneau expansible (30) consiste en plusieurs segments d'anneau (31, 32, 33), chacun étant équipé de l'un des mécanismes à double charnière correspondants (37, 38, 39) auxquels sont fixés de manière pivotante les bras de charnière supérieurs (21, 22) aux côtés supérieurs desdits mécanismes à double charnière (37, 38, 39), et auxquels sont fixés de manière pivotante les bras de charnière inférieurs (41, 42) aux côtés inférieurs desdits mécanismes à double charnière (37, 38, 39) ;
- où lesdites plaques d'assemblage (10, 60) sont en outre reliées mécaniquement par un moyen d'entraînement d'expansion (80) capable de changer la distance relative entre lesdites plaques d'assemblage (10, 60) d'une manière contrôlable, où ladite action change le rayon de le mécanisme d'anneau expansible (30) situé entre les plaques d'assemblage (10, 60) forçant l'ensemble de bras d'articulation supérieurs (21, 22) et l'ensemble de bras d'articulation inférieurs (41, 42) à pousser les segments d'anneau (31, 32 , 33) dans la direction radiale dès que la distance entre les plaques d'assemblage (10, 60) diminue, et de rétracter les segments d'anneau (31, 32, 33) radialement dès que la distance entre les plaques d'assemblage (10, 60) augmente ;
- où le plateau inférieur d'assemblage (60) comporte un mât creux (100) monté étanche à base pleine (101), ledit mât (100) comportant un emboîtement interne pour recevoir une partie ou la totalité des moyens d'entraînement à expansion (80) ;
- où un moyen d'étanchéité élastique (90) est fixé à la plaque d'assemblage inférieure (60) d'un côté et aux bras d'articulation supérieurs (21, 22) via un moyen de fixation (91) du côté opposé, enfermant tous les segments d'anneau (31 , 32, 33) du mécanisme à bague expansible (30) par une section d'étanchéité de paroi (93) et formant barrière pour le fluide de la conduite qui exerce une pression dans la direction du mât (100) sur lesdits moyens élastiques (90) ;
- où le le mécanisme d'anneau expansible (30) est constitué de trois couches, chaque couche étant formée d'un seul type de segments d'anneaux ; où tous les premiers segments d'anneau (31) sont équipés de deux fentes (34), où tous les deuxièmes segments d'anneau (32) sont équipés de deux broches coulissantes (35), où tous les troisièmes segments d'anneau (33) sont équipés de deux fentes (36 ) ; dans lequel toutes les broches coulissantes (35) sont utilisées pour coulisser à l'intérieur des fentes (34, 36) de manière à ce que lesdits segments annulaires (31, 32, 33) soient mutuellement connectés selon un ou plusieurs motifs : le premier segment annulaire (31) - le deuxième segment d'anneau (32) - le troisième segment d'anneau (33) - le deuxième segment d'anneau (32) et encore le premier segment d'anneau (31) ; dans lequel la connexion entre les fentes (34, 36) et les goupilles coulissantes correspondantes (35) permet une connexion rigide entre lesdits segments d'anneaux ci-dessus (31, 32, 33) pendant le processus d'expansion et de rétraction dudit mécanisme d'anneau d'expansion (30 ) ; **caractérisé en ce que**
les bras d'articulation en outre équipés de lames correspondantes (51, 52), qui agissent comme des barrières anti-pression, sont fixées à l'ensemble correspondant de bras d'articulation inférieurs (41, 42) via un moyen de fixation de lame correspondant (71, 72) permettant auxdites lames (51, 52 ) à empiler les unes sur les autres une fois que le mécanisme à anneau expansible (30) est complètement rétracté par l'action des moyens d'entraînement à expansion (80), et où lesdites lames (51, 52) recouvrent l'ensemble du mécanisme à anneau expansible (30) orienté en surface vers le mât (100) une fois que ledit mécanisme à anneau expansible (30) est entièrement expansé de manière à ce que ladite surface soit constituée des lames (51, 52) qui se recouvrent partiellement ;
- la surface intérieure des moyens d'étanchéité élastiques (90), orientée vers le mécanisme à anneau expansible (30), s'adapte à la surface constituée des lames (51, 52) et transmet toute la charge de pression de fluide auxdites lames (51, 52 ) qui sont fixés aux bras d'articulation correspondants (41, 42) et empêche une déformation extrême des moyens d'étanchéité élastiques, ainsi que des fuites et des fissures sous la pression exercée par le fluide.

2. Dispositif de fermeture de tuyau de grand diamètre selon la revendication 1, dans lequel les bras d'articulation supérieurs (21, 22) et les bras d'articulation inférieurs correspondants (41, 42) sont formés en miroir l'un sur l'autre ; les premiers bras d'articulation supérieurs (21) et les premiers bras d'articulation inférieurs (41) étant plus étroits que les seconds bras d'articulation supérieurs (22) et les seconds bras d'articulation inférieurs (44) afin de ménager de l'espace sur les plaques d'assemblage correspondantes (10, 60) et de permettre un conditionnement serré desdits bras de charnière en montant indifféremment chaque premier bras de charnière (21, 41) après le deuxième bras de charnière (22, 42).

3. Dispositif de fermeture de tuyau de grand diamètre selon l'une quelconque des revendications précédentes, dans lequel chaque première lame (51) est formée avec sa partie pliée de lame (51'), et où chaque première lame (51) est attachée de manière lâche via les premiers moyens de fixation de lame. (71) au premier bras d'articulation inférieur (41) correspondant qui permet l'empilement desdites premières lames (51) les unes sur les autres et leur recouvrement sur leurs régions de partie coudée (51') lors de la rétraction du mécanisme à anneau expansible (30 ), où chaque deuxième lame (52) est emboîtée entre deux premières lames (51) voisines.

4. Dispositif de fermeture de tuyau de grand diamètre selon la revendication 3, dans lequel le premier moyen de fixation à lame (71) est formé comme un moyen de fixation à boulon à ressort.

5. Dispositif de fermeture de tuyau de grand diamètre selon l'une quelconque des revendications 1 à 4, dans lequel les moyens d'entraînement d'expansion (80) sont sélectionnés pour être un mécanisme à broche où l'axe de broche correspondant relie mécaniquement les centres des plaques d'assemblage (10, 60), et où ledit axe de broche est emboîté dans le mât (100) une fois que le mécanisme à anneau expansible (30) est entièrement déployé, ledit mécanisme à broche étant engagé par un couple mécanique appliqué à une douille d'insertion (81) située au sommet du première plaque d'assemblage (10) .

6. Dispositif de fermeture de tuyau de grand diamètre selon l'une quelconque des revendications 1 à 4, dans lequel les moyens d'entraînement d'expansion (80) sont sélectionnés pour être un vérin hydraulique avec une tige de piston correspondante qui relie mécaniquement les centres des plaques d'assemblage (10, 60) et déploie ou rétracte le mécanisme à bague expansible (30) dudit dispositif de fermeture.

7. Dispositif de fermeture de canalisation de grand diamètre selon la revendication 6, dans lequel le vérin hydraulique est situé à l'intérieur du mât (100).

8. Dispositif de fermeture de tuyau de grand diamètre selon l'une quelconque des revendications précédentes, dans lequel le mât (100) est en outre équipé d'un moyen de ventilation pour éliminer l'air résiduel accumulé entre la surface extérieure du moyen d'étanchéité élastique (90) orientée vers le fluide à l'intérieur du ladite conduite, où ledit dispositif de fermeture est monté pour arrêter ledit écoulement de fluide.

9. Dispositif de fermeture de tuyau de grand diamètre selon l'une quelconque des revendications précédentes, dans lequel le rapport entre le diamètre minimum du mécanisme de bague d'expansion (30) et le diamètre maximum du mécanisme de bague d'expansion (30) est inférieur à 0,5.

10. Dispositif de fermeture de tuyaux de grand diamètre selon l'une quelconque des revendications précédentes, dans lequel le dispositif est capable de sceller les tuyaux d'un diamètre allant jusqu'à 0,9 m, et où la pression exercée sur les lames (51, 52) supportant les moyens d'étanchéité élastiques ( 90) jusqu'à 2 bars.
